# EUROPÄISCHE PATENTANMELDUNG

(11) **EP 1 657 582 A1**
(43) Veröffentlichungstag der Anmeldung: **17.05.2006**
(21) Anmeldenummer: 05024109.0
(22) Anmeldetag: 04.11.2005
(51) Int. Cl.: G02B 27/22

(54) **Vorrichtung zur Stereobildbetrachtung**

(30) Priorität: 10.11.2004 DE 102004054365
(71) Anmelder: Xetos AG, 82064 Strasslach (DE)
(72) Erfinder: Knocke, Frank, 85560 Ebersberg (DE); de Jongh, Rudi, 83026 Rosenheim (DE); Frömel, Martin, Dr., 82343 Pöcking (DE)
(74) Vertreter: Jacoby, Georg

(57) **Zusammenfassung**

Vorrichtung zur Multistereobildbetrachtung basierend auf dem Parallaxabbildungsprinzip, mit mehreren nebeneinander angeordneten Bildelementen. Die Bildelemente umfassen jeweils ein Bildträgerelement, auf dessen Oberfläche Bildstreifen nebeneinander dargestellt sind, die gemäß dem Parallaxabbildungsprinzip aus zweidimensionalen Teilbildern eines darzustellenden Objekts erzeugt sind, sowie ein Abbildungssystem, das abhängig vom Betrachtungswinkel im wesentlichen nur einen Bildstreifen des zugehörigen Bildträgerelementes abbildet. Die Oberfläche des Bildträgerelementes ist quer zur Längsrichtung der Bildstreifen im wesentlichen konkav, insbesondere halbkreisförmig ausgebildet.

## Beschreibung

Das plastische Sehen von Menschen und Tieren beruht u.a. darauf, daß in jedem der beiden Augen eine Projektion des beobachteten Objektes auf die Retina stattfindet und aufgrund des Abstands zwischen linkem und rechtem Auge die zweidimensionalen Abbilder des Objektes jeweils aus leicht unterschiedlichem Blickwinkel zeigen. Das visuelle Zentrum im Gehirn ist in der Lage, aus den Unterschieden der beiden Bilder auf die Entfernung des Objektes rückzuschließen und dadurch aus den beiden zweidimensionalen Bildern einen räumlichen Seheindruck zu gewinnen.

Dieses Prinzip kann dazu genutzt werden, um künstlich einen dreidimensionalen Seheindruck eines Objekts zu erzeugen. Es ist bekannt, daß mittels eines zweidimensionalen Bildpaares (einem sogenannten Stereobildpaar), das ein Objekt aus zwei leicht unterschiedlichen Blickwinkeln zeigt, die Illusion eines plastischen Seheindrucks hervorgerufen werden kann. Solche Stereobildpaare können beispielsweise mit speziellen Kameras gewonnen werden, die mit zwei Objektiven im Augenabstand ausgestattet sind, um gleichzeitig das Objekt so aufzunehmen, wie es auch ein zweiäugiger Betrachter sehen würde.

Die Problematik der Erzeugung eines künstlichen Raumeindrucks besteht darin, die beiden zweidimensionalen Bilder den beiden Augen getrennt zu präsentieren, so daß der Raumeindruck zustande kommen kann. Im allgemeinen sind hierzu spezielle Mittel notwendig, wie beispielsweise die bekannte Rot-Grün-Brille, Polarisationsbrillen, Stereo-Diaskope oder Shutterbrillen. Auch sind Systeme bekannt, die auf Schlitzmasken beruhen, die einem Beobachter in einer bestimmten Entfernung jeweils verschiedene Bilder für linkes und rechtes Auge darbieten. Bei den genannten Techniken können die Stereobildpaare separiert bereitgestellt werden (wie beispielsweise beim Diaskop), zu einem kombiniertem Bild zusammengeführt werden (wie beispielsweise bei der Rot-Grün-Technik), oder sequentiell jeweils dem einen und dem anderen Auge präsentiert werden (wie beispielsweise bei der Shutter-Brille).

Eine Technik zur Erzeugung von Bildern mit dreidimensionalem Eindruck ist die Parallaxabbildungstechnik. Dabei werden mehrere Abbildungen eines Objekts, die sogenannten Teilbilder, verwendet. Auf der Parallaxabbildungstechnik basieren beispielsweise die sogenannten Parallaxstereogramme, bei denen die Teilbilder Ansichten des Objekts aus leicht verschiedenen Blickrichtungen zeigen, wodurch ein plastischer Eindruck des abgebildeten Objekts erzeugt wird. Werden bei der Parallaxabbildungstechnik Lentikularlinsen verwendet, so spricht man auch von der Lentikulartechnik. Die Parallaxabbildungstechnik wird aber nicht ausschließlich zur Stereobilderzeugung verwendet. Bei dieser Technik ist es auch möglich, mehrere perspektivische Teilbilder vom Objekt pro Bildträgerelement zu verwenden. Dadurch wird der räumliche Eindruck noch wesentlich verstärkt, weil so ein Multistereogramm (wie ein Hologramm) auch auf eine seitliche Kopfbewegung mit einer entsprechenden perspektivischen Bildveränderung reagiert. Alternativ können diese Multistereogramme bei Änderung des Betrachtungswinkel auch den Eindruck eines ablaufenden Filmes erzeugen, wenn jedes Teilbild ein anderes Filmbild zeigt.

Die Teilbilder werden vertikal in schmale Streifen aufgeteilt, und so zusammengesetzt, daß alle korrespondierenden Streifen mit der winkelabhängigen Information für einen Bildpunkt nebeneinander angeordnet werden. Auf das so erzeugte Bild wird eine Schlitzmaske oder eine Linsenrasterfolie montiert, die so ausgelegt sind, daß aus verschiedenen Blickwinkeln jeweils nur eines der Teilbilder sichtbar ist. Herkömmliche Lentikularverfahren haben aufgrund der beschränkten Anzahl an Teilbildern einen stark eingeschränkten Öffnungswinkel und sind mit einer gewissen Unschärfe und ruckartigen Übergängen behaftet. Zudem wiederholt sich die Sequenz, wenn die Sehstrahlen bei einem schrägen Betrachtungswinkel auf benachbarte Teilbilder treffen. Im Übergangsbereich, wo die Sehstrahlen zu einem benachbarten Bildträgerelement wechseln, entsteht so ein störender Schnitt in der 3D-Darstellung, weil die beiden Bildhälften des Multistereogramms das Objekt mit einer stark unterschiedlichen Ansicht wiedergeben.

Die obengenannten Systeme haben u.a. die Nachteile, daß der Öffnungswinkel stark eingeschränkt ist und deswegen nicht mehrere Beobachter auf einmal den dreidimensionalen Seheindruck gewinnen können. Für Werbezwecke, Präsentationen oder Designstudien (z.B. in der Automobilindustrie) ist es jedoch wünschenswert, ein bestimmtes Objekt mit räumlichen Eindruck so darzustellen, daß keine weiteren Hilfsmittel notwendig sind und mehrere Betrachter gleichzeitig dasselbe Objekt aus verschiedenen Richtungen betrachten können. Insbesondere ist für einen guten dreidimensionalen Eindruck ausgedehnter Objekte ein großer Öffnungswinkel wünschenswert.

### Zusammenfassung der Erfindung

Die vorliegende Erfindung ist auf eine Vorrichtung zur Multistereobildbetrachtung gerichtet, die auf dem Parallaxabbildungsprinzip basiert. Die Vorrichtung umfaßt mehrere nebeneinander angeordnete Bildelemente. Jedes Bildelement umfaßt ein Bildträgerelement, auf dessen Oberfläche Bildstreifen nebeneinander dargestellt sind, die gemäß dem Parallaxabbildungsprinzip aus zweidimensionalen Teilbildern eines darzustellenden Objekts erzeugt sind, und ein Abbildungssystem, das abhängig vom Betrachtungswinkel im wesentlichen nur einen Bildstreifen des zugehörigen Bildträgerelementes abbildet.

Gemäß eines ersten Aspekts ist die Oberfläche des Bildträgerelementes quer zur Längsrichtung der Bildstreifen im wesentlichen konkav, insbesondere halbkreisförmig.

Gemäß eines zweiten Aspekts sind die Bildelemente nebeneinander entlang der Oberfläche eines im wesentlichen zylinderförmigen Körpers angeordnet.

### Beschreibung der Zeichnungen

Im folgenden werden Ausführungsbeispiele der Erfindung beschrieben, wobei auf die beigefügten Zeichnungen verwiesen wird, von denen
- Fig. 1: erläutert, wie gemäß dem Stand der Technik aus zwei verschiedenen Teilbildern ein Stereobild zusammengesetzt wird;
- Fig. 2: schematisch in Aufsicht das Prinzip der Parallaxabbildungstechnik gemäß dem Stand der Technik anhand eines Bildes veranschaulicht, das aus zwei verschiedenen Teilbildern besteht, wobei die Abbildung mittels einer Lentikularlinsenanordnung erfolgt;
- Fig. 3: schematisch in Aufsicht das MultistereographiePrinzip der Parallaxabbildungstechnik gemäß dem Stand der Technik anhand eines Bildes veranschaulicht, das aus vier verschiedenen Teilbildern besteht, wobei die Abbildung mittels einer Schlitzmaske erfolgt;
- Fig. 4a: schematisch in Aufsicht ein Ausführungsbeispiel eines Bildelements zeigt, das zwei korrespondierende Bild- streifen umfaßt, die längs der Innenwand eines Halbzylinders angeordnet sind;
- Fig. 4b: schematisch in Aufsicht ein Ausführungsbeispiel eines Bildelements zeigt, das vier korrespondierende Bildstreifen umfaßt, die längs der Innenwand eines Halbzylinders angeordnet sind;
- Fig. 5: schematisch in Aufsicht ein Ausführungsbeispiel eines Bildelements zeigt, das aus zwei korrespondierenden Bildstreifen besteht, die längs der Innenwand eines Winkelelements angeordnet sind;
- Fig. 6a: schematisch in Aufsicht ein Ausführungsbeispiel mit drei nebeneinander angeordneten, eine Ebene bildenden Bildelementen zeigt;
- Fig. 6b: schematisch in Aufsicht ein Ausführungsbeispiel mit drei nebeneinander angeordneten, zueinander gewinkelt stehenden Bildelementen zeigt;
- Fig. 7a: schematisch in Aufsicht ein Ausführungsbeispiel mit entlang eines geschlossenen Kreises angeordneten Bildelementen zeigt;
- Fig. 8a: schematisch in Aufsicht ein Ausführungsbeispiel mit entlang eines Halbzylinders angeordneten Bildstreifen zeigt;
- Fig. 8b: schematisch in Aufsicht ein alternatives Ausführungsbeispiel mit entlang eines Halbzylinders angeordneten Bildstreifen zeigt, bei dem die durch Bildstreifen abgedeckte Fläche des Halbzylinders nicht bis dessen Rand reicht;

- Fig. 8c: schematisch in Aufsicht ein alternatives Ausführungsbeispiel mit entlang eines Halbzylinders angeordneten Bildstreifen zeigt, bei dem die Rückseite der Schlitzmaske mit einer reflektierenden Oberfläche ausgestattet ist;
- Fig. 8d: schematisch in Aufsicht ein alternatives Ausführungsbeispiel zeigt, bei dem hinter dem Bildträgerelement ein Fokussierungssystem zur Erhöhung der Lichtausbeute angeordnet ist;
- Fig. 8e: schematisch in Aufsicht ein Ausführungsbeispiel mit aktiv leuchtenden Bildpunkten (LED, OLED, ...) und Linsen zur Erhöhung der Lichtausbeute zeigt;
- Fig. 9: schematisch in perspektivischer Darstellung ein Ausführungsbeispiel der Vorrichtung zur Stereobildbetrachtung zeigt, bei der die Bildelemente entlang der Oberfläche eines zylinderförmigen Körpers angeordnet sind.

### Beschreibung der Ausführungsbeispiele

Bei den im folgenden beschriebenen Ausführungsbeispielen der Erfindung handelt es sich um eine Vorrichtung zur Stereobildbetrachtung und Varianten davon, die auf der an sich bekannten Parallaxabbildungstechnik basieren. Bei der Parallaxabbildungstechnik wird ein Bild eines Objekts aus zwei oder mehreren Teilbildern zusammengesetzt, die so in Bildstreifen aufgeteilt sind, daß abhängig vom Blickwinkel (Parallaxe) im wesentlichen nur ein bestimmtes Teilbild wahrgenommen wird. Hierzu werden die Teilbilder beispielsweise in zueinander parallele Bildstreifen aufgeteilt. Die jeweils ersten Bildstreifen der Teilbilder werden zu einer ersten Gruppe zusammengefaßt, die zweiten Bildstreifen zu einer zweiten Gruppe, usw., so daß die so definierten Gruppen jeweils aus den korrespondierenden Bildstreifen der verschiedenen Teilbilder bestehen. Die Gruppen korrespondierender Bildstreifen müssen dabei nicht notwendigerweise die jeweils korrespondierenden Bildstreifen aller Teilbilder umfassen. In einigen Ausführungsbeispielen umfaßt eine Gruppe korrespondierender Bildstreifen beispielsweise nur die korrespondierenden Bildstreifen einer Untermenge der Teilbilder, insbesondere einer bestimmten Anzahl an Teilbildern, die um ein zentrales Teilbild angeordnet sind. Auf diese Weise bilden die Gruppen korrespondierender Bildstreifen Untermengen von Bildstreifen, die zusammengefaßt einzelnen Bildelementen zugeordnet werden.

In den im folgenden detaillierter beschriebenen Ausführungsbeispielen sind die Bildstreifen einer Gruppe korrespondierender Bildstreifen entlang einer im wesentlichen konkaven Ebene nebeneinander angeordnet. Die Ebene ist dabei im wesentlichen quer zur Längsrichtung der Bildstreifen konkav gekrümmt, also in der Richtung, in der die Bildstreifen nebeneinander angeordnet sind. Der Begriff "Bildstreifen" bezieht sich hier abstrakt auf Bildinformationen und nicht auf einen materiellen Gegenstand. Die konkave Ebene wird durch die Oberfläche eines Bildträgerelementes gebildet, auf dem die korrespondierenden Bildstreifen dargestellt sind. Das Bildträgerelement ist irgendein Medium, auf dem die Bildinformationen gedruckt oder anderweitig, z.B. elektronisch dargestellt sind. Bei der konkaven Oberfläche, entlang der die Bildstreifen angeordnet sind, kann es sich beispielsweise um die Innenseite eines Halbzylinders handeln. In diesem Fall ergibt sich quer zur Längsrichtung der Bildstreifen ein halbkreisförmiger Schnitt durch die Oberfläche des Bildträgerelements. Denkbar sind auch andere Anordnungen, wie beispielsweise entlang der Innenflächen eines Winkelelements oder auf den Innenflächen eines Kastens.

Ein räumlicher Eindruck des Objekts kann dadurch erzeugt werden, daß wenigstens zwei Teilbilder eines Objekts einem Betrachter derart dargeboten werden, daß linkes und rechtes Auge jeweils ein unterschiedliches Teilbild sehen. Dabei stellen die einzelnen Teilbilder das Objekt unter jeweils leicht verschiedenen Betrachtungswinkel dar, so daß im visuellen Zentrum des Gehirns des Betrachters aus den beiden wahrgenommenen Teilbildern ein plastischer Eindruck des Objekts gewonnen wird. Bei dem Objekt kann es sich beispielsweise um einen plastischen Körper oder auch um eine Szene handeln. Es sei bemerkt, daß die Teilbilder nicht notwendiger Weise das Objekt aus verschiedenen Betrachtungswinkeln zeigen müssen. Es ist auch möglich, daß die unterschiedlichen Teilbilder das Objekt in zeitlich verschiedenen Phasen zeigen, so daß bei Positionsveränderung der Eindruck eines bewegten Objektes entsteht. Insofern wird hier auch der allgemeinere Begriff des Parallaxabbildungsprinzips verwendet, um darauf hinzuweisen, daß das Parallaxstereobildprinzip neben der Stereobilddarstellung auch zur Darstellung bewegter Objekte oder anderer Effekte, wie z.B. Bildflips oder Kombinationen, angewendet wird.

Bei dem für die parallaxenselektive Abbildung benötigten Abbildungssystem kann es sich um eine Schlitzmaske oder Lentikularlinse (z.B. eine Lentikularlinsenfolie) handeln. Insbesondere bei der Verwendung von Schlitzmasken als Abbildungssysteme kann eine zusätzliche Beleuchtung der Bildstreifen, sowie eventuell die Verwendung lichtreflektierender Flächen hilfreich sein, um die Lichtausbeute zu erhöhen. Auch die Verwendung von Fokussierungsoptiken oder aktiv leuchtenden Displays kann hilfreich sein.

Eine Vorrichtung zur Multistereobildbetrachtung kann beispielsweise so aus Bildelementen aufgebaut werden, daß diese im wesentlichen entlang der Oberfläche eines zylinderförmigen Körpers angeordnet sind. Die Teilbilder des Objektes und die Zuordnung der Bildstreifen zu den Bildelemente können derart erzeugt werden, daß die Ansicht des dargestellten Objektes unter jedem Betrachtungswinkel, unter dem ein Betrachter den tonnenförmigen Körper betrachtet, der realen Ansicht des Objekts entspricht. Auch kann in diesem tonnenförmigen Körper eine Lichtquelle zur rückseitigen Beleuchtung der Bildstreifen angebracht werden. Dazu sollten die Bildstreifen bzw. die konkave Innenfläche des Bildträgerelements, auf der diese angeordnet sind, möglichst transparent sein, für Licht das von hinten durch die Bildstreifen in die Bildelemente dringt. Andererseits wäre es vorteilhaft, wenn Licht, das von vorne auf die Bildstreifen fällt, von diesen möglichst absorbiert oder reflektiert wird. Die gesamte Vorrichtung kann drehbar gelagert sein, um durch einen Antrieb in Bewegung versetzt, einem im wesentlichen stationären Betrachter eine Rundumsicht auf das dargestellte Objekt zu bieten oder das Objekt in anderer Weise zu animieren. Außerdem kann so die Auflösung erhöht werden. Bei genügend hoher Geschwindigkeit sorgt die Flimmerverschmelzungsfrequenz des Auges dafür, daß die Schlitzmaske nicht mehr sichtbar ist. Bei den Bildstreifen kann es beispielsweise um gedruckte Bildinformationen handeln, um Fotomaterial, aber auch um Displays zur Darstellung elektronischer Bildinformationen. Bei Verwendung elektronischer Bilderzeugung ist es insbesondere auch möglich durch sequentielle Bildwechsel bewegte Objekte bzw. Szenen darzustellen.

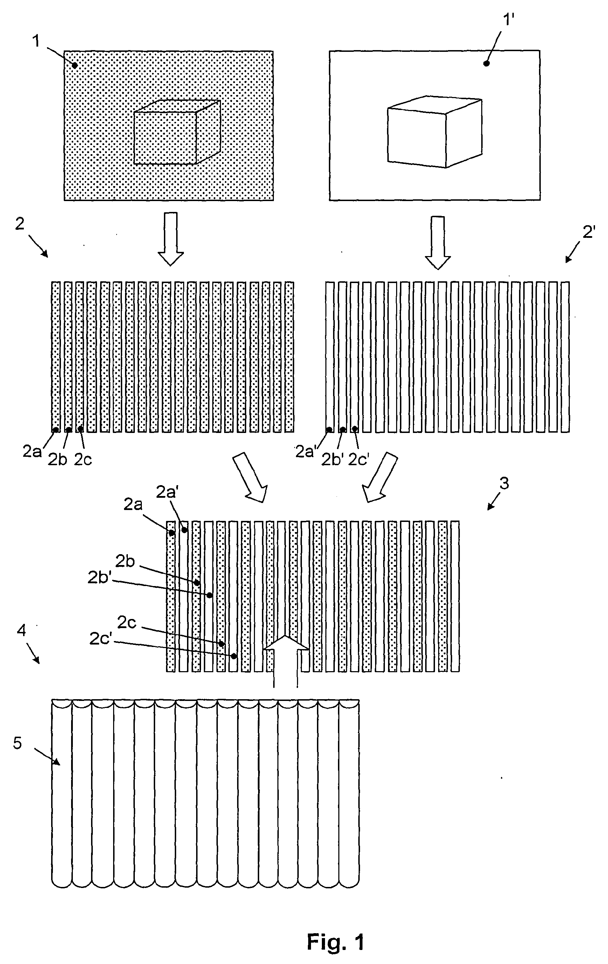

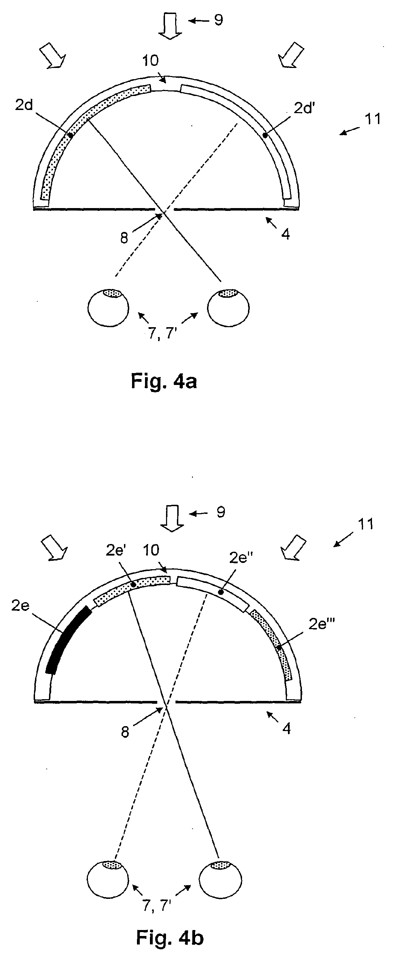

Im folgenden wird das Grundprinzip der Parallaxabbildungstechnik (Figuren 1-3), sowie die beispielhaften Ausführungsformen der Erfindung (Figuren 4-9) anhand der beigefügten Zeichnungen detaillierter beschrieben.

In Fig. 1 ist die Parallaxabbildungstechnik anhand eines Stereobildes demonstriert, das aus insgesamt zwei Teilbildern 1, 1' besteht. Die beiden Teilbilder 1, 1' sind jeweils in parallele Bildstreifen 2, 2' aufgeteilt. Der erste Bildstreifen 2a des ersten Teilbildes 1 wird neben dem ersten Bildstreifen 2a' des zweiten Teilbildes 1' angeordnet. Danach folgen der zweite Streifen 2b des ersten Teilbildes 1, der zweite Streifen 2b' des zweiten Teilbildes 1', der dritte Streifen 2c des ersten Teilbildes 1, der dritte Streifen 2c' des zweiten Teilbildes 1', usw. Auf diese Weise setzt sich aus den Bildstreifen 2, 2' der Teilbilder 1, 1' ein Stereobild 3 zusammen. Ein geeignetes Abbildungssystem 4 sorgt dafür, daß vom linken und rechten Auge des Betrachters das jeweils entsprechende Teilbild 1 oder 1' gesehen wird. In Fig. 1 besteht das Abbildungssystem 4 aus nebeneinander angeordneten Lentikularlinsen 5, die in einer Lentikularlinsenfolie zusammengefaßt sind. Die Lentikularlinsenfolie ist über dem Stereobild 3 derart angeordnet, daß jede Lentikularlinse 5 einer der Gruppen korrespondierender Bildstreifen zugeordnet ist.

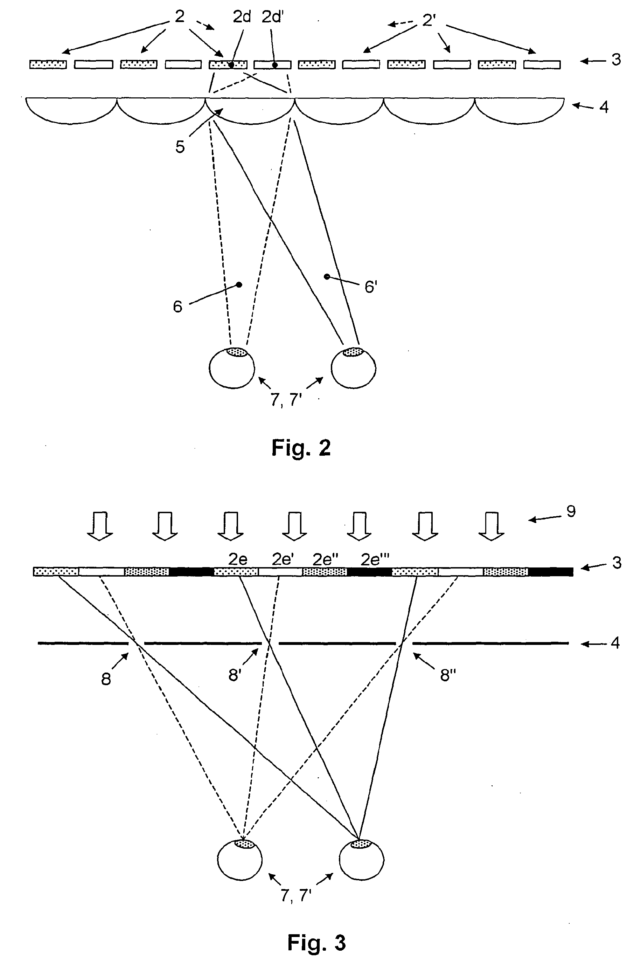

In Fig. 2 ist das aus zwei verschiedenen Teilbildern bestehende Stereobild 3 aus Fig. 1 in Aufsicht dargestellt. Vor dem Stereobild 3 befindet sich die Anordnung 4 aus Lentikularlinsen 5. Jede Lentikularlinse 5 überdeckt ein Paar korrespondierender Bildstreifen (beispielsweise 2d und 2d'). In Fig. 2 sind schematisch zwei Lichtbündel 6, 6' eingezeichnet, die zeigen, wie ein linker Bildstreifen 2d von einer Lentikularlinse 5 in das rechte Auge 7' des Betrachters, und ein rechter Bildstreifen 2d' in das linke Auge 7 des Betrachters projiziert wird. Entsprechendes gilt auch für die übrigen Paare korrespondierender Bildstreifen, so daß vom linken Auge 7 im wesentlichen die Bildstreifen 2' des zweiten Teilbildes 1' wahrgenommen werden, wohingegen vom rechten Auge 7' die Bildstreifen 2 des ersten Teilbildes 1 wahrgenommen werden.

Fig. 3 zeigt eine Variation der Fig. 2, in der schematisch ein Stereobild in Aufsicht dargestellt ist, das aus vier verschiedenen Teilbildern besteht (ein Stereobild, das aus mehr als zwei Teilbildern aufgebaut ist, wird auch als Parallax-Panoramagramm bezeichnet). In dem in Fig. 3 gezeigten Beispiel besteht das Gesamtbild aus vier verschiedenen Teilbildern, so daß jeweils vier Bildstreifen eine Gruppe korrespondierender Bildstreifen bilden. Die Bildstreifen einer Gruppe korrespondierender Bildstreifen sind in Fig. 3 beispielhaft mit den Bezugszeichen 2e, 2e', 2e" und 2e"' gekennzeichnet. Das Abbildungssystem 4 besteht in dem hier gezeigten Beispiel aus einer Schlitzmaske. In Fig. 3 sind drei Schlitze 8, 8', 8'' eingezeichnet. Für jeden Schlitz sind die Sehstrahlen eingezeichnet, die ins linke bzw. rechte Auge des Betrachters führen. Die Sehstrahlen, die ins linke Auge führen, sind durch gestrichelte Linien gekennzeichnet, diejenigen, die ins rechte Auge führen, durch durchgezogene Striche. Anhand der schematischen Darstellung wird deutlich, daß vom rechten Auge des Betrachters im wesentlichen das erste Teilbild des Stereobildes 3 wahrgenommen wird, wohingegen vom linken Auge im wesentlichen das zweite Teilbild wahrgenommen wird. Die restlichen Teilbilder werden in dieser Position des Betrachters im wesentlichen nicht wahrgenommen. Bei einer horizontalen Verschiebung des Betrachters ändert sich der Betrachtungswinkel, so daß andere Teilbilder wahrgenommen werden. Diese können beispielsweise das abgebildete Objekt aus einem anderen Betrachtungswinkel darstellen. Auch ist es denkbar, durch unterschiedliche Bildsequenzen bei Positionsveränderung des Betrachters den Eindruck eines ablaufenden Filmes zu erwecken. Wird das Stereogramm zusätzlich beleuchtet (in Fig. 3 durch die Pfeile 9 angedeutet), beispielsweise durch eine Lichtquelle, die sich hinter dem Stereobild befindet, so liefert dies insbesondere bei der Verwendung von Schlitzmasken als Abbildungssystem eine höhere Lichtausbeute. Die in Fig. 3 dargestellte Schlitzmaske kann natürlich auch durch ein Lentikularlinsensystem gemäß Fig. 2 ersetzt werden.

Die Figuren 4a und 4b zeigen Ausführungsbeispiele einer Anordnung einer Gruppe korrespondierender Bildstreifen in einem Bildelement, bei der die einzelnen Bildstreifen nicht in einer Ebene liegen, sondern entlang der Innenwand eines Bildträgerelements 10 in Form eines Halbzylinders angeordnet sind. Das Bildträgerelement 10 kann z.B. aus steifem Papier bestehen, auf das die Bildinformationen der Bildstreifen gedruckt sind, und das in die nötige konkave Form gebogen wird. Alternativ kann das Bildträgerelement 10 auch aus transparentem Kunststoff oder Acrylglas bestehen, auf das die Bildstreifen in Form dünner Folien aufgebracht sind.

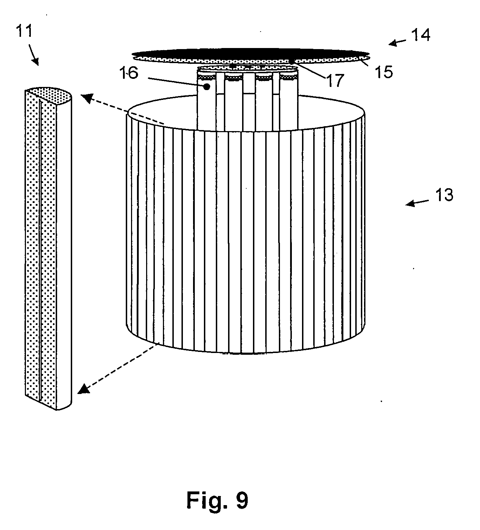

In Fig. 4a ist ein Halbzylinder 10 in Aufsicht dargestellt, auf dessen Innenfläche zwei korrespondierende Bildstreifen 2d, 2d' angeordnet sind. Der Halbzylinder 10 kann beispielsweise aus Kunststoff, Karton oder Metall bestehen. Die Bildstreifen 2d, 2d' können auf die Innenseite des Halbzylinders aufgedruckt oder aufgeklebt sein. Der Halbzylinder 10 ist durch eine Schlitzmaske 4 abgeschlossen, die beispielsweise in der Mitte einen Schlitz 8 für die parallaxenabhängige Abbildung der Bildstreifen 2d, 2d' aufweist. In der schematischen Darstellung aus Fig. 4a schließen die beiden Bildstreifen 2d, 2d' nicht direkt aneinander an. In realen Ausführungsformen könnten sie aber ebenso direkt aneinander angrenzend angeordnet sein. Eine perspektivische Darstellung dieser halbzylindrischen Anordnung ist durch die in Fig. 9 gezeigte Ausführungsform eines Bildelements 11 gegeben.

In Abb. 4b ist eine Anordnung der Bildstreifen gezeigt, die jener aus Fig. 4a entspricht, jedoch besteht hier die Gruppe korrespondierender Bildstreifen aus vier Bildstreifen 2e, 2e', 2e", 2e"' . Der in den Figuren 4a und 4b gezeigte Aufbau läßt sich auf eine beliebige Anzahl von Bildstreifen pro Gruppe bzw. Bildträgerelement verallgemeinern.

Die in den Fig. 4a und 4b gezeigte Anordnung der Bildstreifen läßt sich auch mit alternativen Abbildungssystemen realisieren. So ist es ohne weiteres denkbar, die Schlitzmaske durch eine Lentikularlinse zu ersetzen. Eine Beleuchtung der Bildstreifen (in den Figuren durch die Pfeile 9 angedeutet) kann vorteilhaft sein.

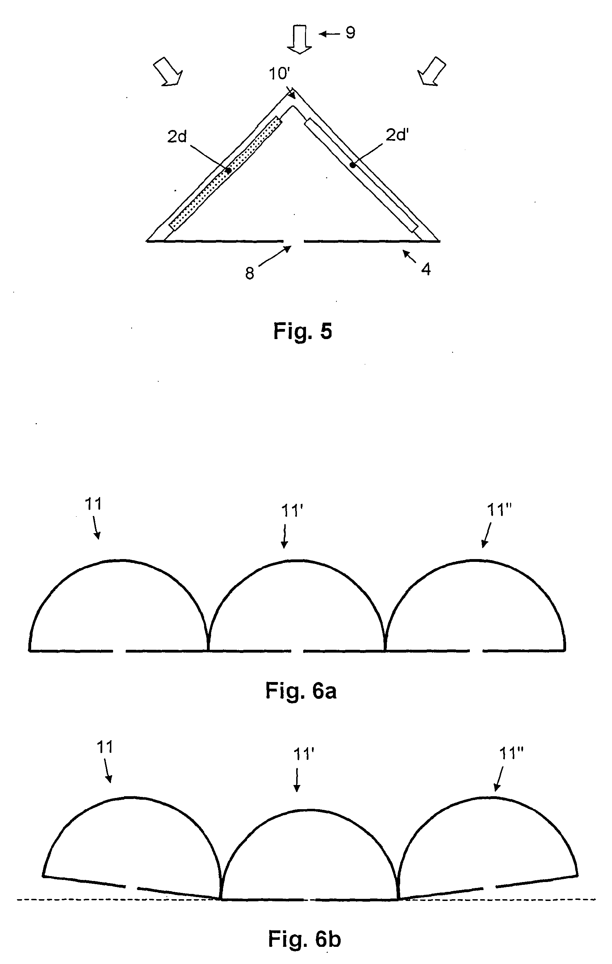

In Fig. 5 ist eine weitere Ausführungsform gezeigt, in der die Bildstreifen 2d, 2d' an der Innenseite eines Winkelschenkels 10' angeordnet sind.

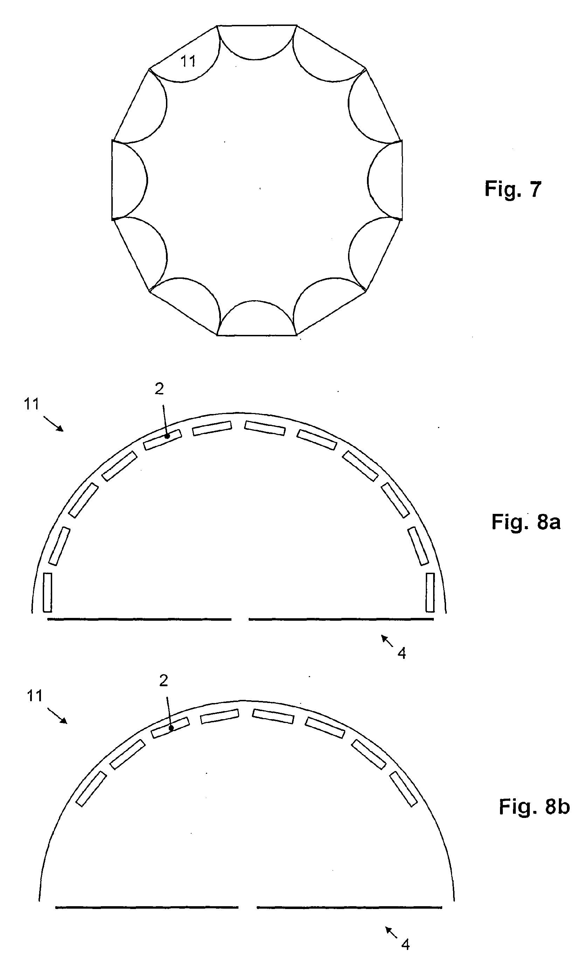

Die verschiedenen Gruppen korrespondierender Bildstreifen der Teilbilder können gemäß einer der oben beschriebenen Geometrien oder Varianten davon, zu Bildelementen angeordnet werden, aus denen sich eine entsprechende Vorrichtung zur Stereobildbetrachtung aufbauen läßt. In Fig. 6a ist beispielhaft gezeigt, wie mehrere Bildelemente 11, 11', 11 " aneinandergefügt werden können, um daraus ein gesamtes Stereobild aufzubauen. Fig. 6b zeigt, wie die Bildelemente 11, 11', 11'' auch zueinander gewinkelt angeordnet werden können. Durch eine gewinkelte Anordnung der Bildelemente lassen sich diese auch zu einem geschlossenen System anordnen, wie es in Fig. 7 anhand einer kreisförmigen Anordnung der Bildelemente 11 gezeigt ist.

Eine derartige Anordnung der Bildelemente ermöglicht es, einem oder mehreren Betrachtern eine vollständige Rundumsicht eines darzustellenden Objekts zu bieten. Hierzu könnten beispielsweise N Teilbilder zugrunde gelegt werden, die das Objekt in Winkelschritten von α = 360°/N darstellen. In einer derartigen Anordnung umfaßt ein Bildelement im wesentlichen jene Teilbilder, die in seinem Öffnungswinkel liegen. Das sind normalerweise diejenigen Bildelemente, die in der Nachbarschaft des Teilbildes liegen, das dem Betrachtungswinkel entspricht, der durch die Position des Elements in der Anordnung definiert ist. Es ist insbesondere nicht nötig, daß ein Bildelement Bildstreifen umfaßt, die zu dem Teilbild gehören, daß jene Seite des (virtuellen) Objekts darstellt, die der Position des Bildelements gegenüberliegt. Durch die halbkreisförmige Biegung des Bildträgers hinter jedem Element wird im Gegensatz zu herkömmlichen Lentikularbildern ein sehr großer Öffnungswinkel (bis fast 180°) und eine sehr große horizontale Parallaxe erreicht. Ein Übersprechen der benachbarten Elemente wird verhindert.

In den Figuren 8a-c sind optionale Ausführungsformen der Bildelelemente 11 gezeigt. Fig. 8a zeigt schematisch ein Element 11, das dem Ausführungsbeispiel aus Fig. 4b entspricht, aber eine höhere Dichte an Bildstreifen 2 aufweist.

In der in Fig. 8b gezeigten Variante eines Bildelements 11 erstreckt sich die mit Bildstreifen 2 belegte Fläche nicht bis an den Rand des Bildträgerelementes. Bildstreifen am Rand des Bildelementes entsprechen Sichtwinkeln, die stark vom zentralen Sichtwinkel abweichen. Blickt man zentral auf die Anordnung aus Fig. 7 (aus einem beliebigen Punkt in der Papierebene von Fig. 7 genau auf das Zentrum der kreisförmigen Anordnung), so erscheinen jene Bildelemente, die nahezu im 90°-Winkel zum zentralen Bildelement liegen, unter den größten Sichtwinkeln. Bildinformationen, die derart großen Sichtwinkeln entsprechen können aber unter Umständen unwesentlich sein und können deshalb in manchen Fällen auch weggelassen werden.

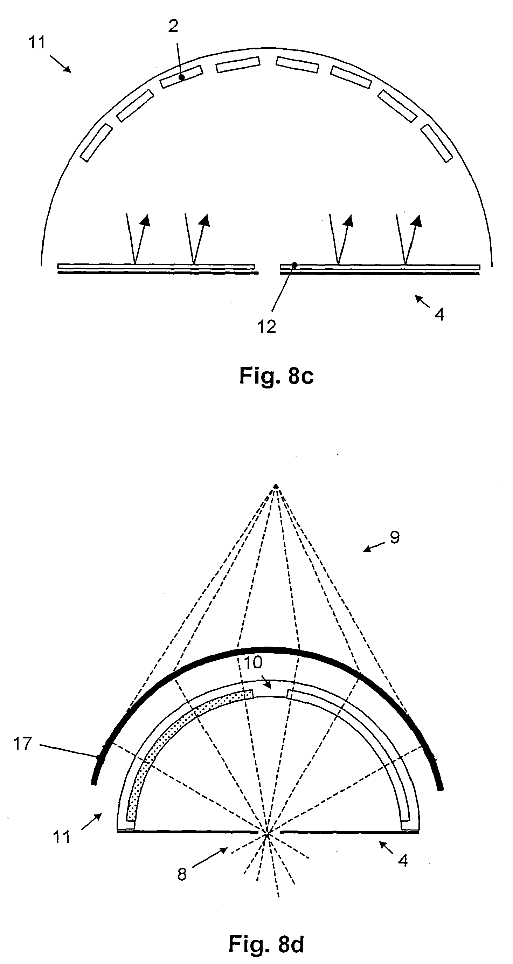

In Fig. 8c ist eine weitere Ausführungsform eines Bildelements 11 schematisch dargestellt. In dieser Ausführungsform ist die Innenseite der Schlitzmaske 4 mit einer lichtreflektierenden Schicht 12 versehen. Diese lichtreflektierende Schicht 12 vergrößert die Lichtausbeute, da sie Licht, das z.B. von einer hinter den Bildstreifen befindlichen Lichtquelle eingestrahlt wird, wieder in den Halbzylinder zurück, auf die Bildstreifen 2 reflektiert. Neben der Rückseite der Schlitzmaske können natürlich auch jene Flächen der Innenwand des Bildträgerelements reflektierend ausgelegt werden, auf denen sich keine Bildstreifen befinden (dies ist in Fig. 8c nicht dargestellt).

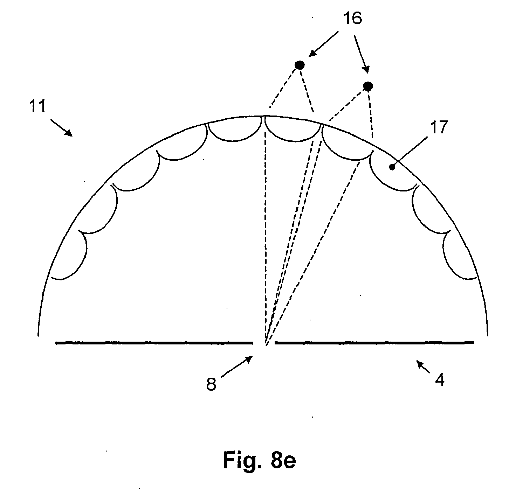

Fig. 8d zeigt eine weitere Maßnahme zur Erhöhung der Lichtausbeute. Hinter dem Bildträgerelement 10 ist ein Fokussierungssystem 17 vorgesehen, das Licht 9, das von einer Lichtquelle ausgestrahlt wird, derart auf das Bildträgerelement 10 bzw. die darauf befindlichen Bildstreifen lenkt, daß ein möglichst großer Lichtanteil auf den Spalt 8 der Schlitzmaske 4 fokussiert wird. Bei dem Fokussierungssystem kann es sich beispielsweise um ein holographisches Gitter oder um ein Fresnel-Prismensystem handeln, das die erforderlichen Abbildungseigenschaften hat. Das holographische Gitter kann beispielsweise auf eine transparente Folie aufgebracht sein. Alternativ könnte das Fokussierungssystem 17 auch vor das Bildträgerelement 10 plaziert werden, um das von den Bildstreifen ausgestrahlte Licht auf den Spalt 8 der Schlitzmaske 4 zu fokussieren (siehe Fig. 8e). Das in Fig. 8e dargestellte Fokussierungssystem 17 kann beispielsweise durch eine Linse realisiert werden und als Lichtquelle 16 können beispielhaft LED/OLEDs vorgesehen werden.

In Fig. 9 ist schematisch eine Ausführungsform einer Vorrichtung zur Stereobildbetrachtung gezeigt, die auf den oben beschriebenen Prinzipien und Elementen basiert. Die Bildelemente 11, die z.B. entsprechend einer der oben beschriebenen Ausführungsformen (Figuren 4a,b, 5, 6, oder 8a,b,c) ausgebildet sind, sind gemäß der horizontalen Querschnittansicht aus Fig. 7 zu einem zylinder- bzw. tonnenförmigen Körper 13 angeordnet. Die gestrichelten Pfeile in Fig. 9 deuten an, daß eines der Bildelemente des Körpers 13 exemplarisch herausgegriffen und in Fig. 9 links neben der Vorrichtung vergrößert abgebildet ist. Im tonnenförmigen Innenraum, der durch die ringförmig angeordneten Bildelemente geformt wird, befindet sich eine Lichtquelle, die hier als eine Gruppe parallel zur Achse der Tonne angeordneter Leuchtstoffröhren 16 aufgebaut ist. Die Tonne 13 wird oben durch einen Deckel 14 abgeschlossen, dessen nach unten weisende Innenfläche 15 lichtreflektierend sein kann, um möglichst viel Licht in die Bildelemente zu lenken. Die Leuchtstoffröhren 16 können beispielsweise mittels einer geeigneten Halterung 17 mit dem Deckel 14 verbunden sein, so daß bei Abnahme des Deckels 14 die Lichtquellenanordnung aus dem Körper 13 entfernt wird, was z.B. beim Austausch der Leuchtstoffröhren 16 hilfreich sein kann. Ein entsprechender Deckel (in Fig. 9 nicht gezeigt), der auch zur Innenseite reflektierend ausgelegt sein kann, könnte die Tonne 13 von unten abschließen. In Fig. 9 ist die Vorrichtung in einem geöffnetem Stadium gezeigt, um die Lichtquelle 16, deren Halterung 17 und die lichtreflektierende Unterseite des Deckels 15 sichtbar zu machen.

Beispielsweise für Präsentationszwecke kann die Vorrichtung optional auch drehbar gelagert werden, um durch Drehung der gesamten Vorrichtung einem oder mehreren im wesentlichen feststehenden Betrachtern einen Rundumblick auf das dargestellte Objekt zu gewähren. Die gesamte Vorrichtung kann hierzu beispielsweise auf einer mittels eines Elektromotors in Rotation versetzte Halterungsplatte plaziert werden.

Um einen Wechsel des darzustellenden Stereobildes zu erleichtern, ist es auch möglich, die Bildstreifen auf einem zusammenhängenden Bildträger anzuordnen, so daß durch Öffnen der Vorrichtung und Entnahme des Bildträgers das gesamte Stereobild leicht ausgewechselt werden kann. Hierzu können bei der Konstruktion der Bildelemente 11 entsprechende Schlitze zur Einführung des Bildträgers vorgesehen werden. Dies hätte zudem den Vorteil, daß das gesamte Stereobild auf einem zusammenhängenden Bildträger erzeugt werden kann, was den Herstellungsprozess der Stereobilder vereinfacht. Ein bedruckter Bildträger könnte beispielsweise nach dem Druck in die benötigte "fächerartige" Form gepreßt oder gefaltet werden, wodurch aus dem ursprünglich flachen Bildträger die einzelnen Bildträgerelemente geformt werden.

Auf Grundlage der oben beschriebenen Ausführungsformen läßt sich durch Verwendung elektrischer Displays eine Vorrichtung zur Betrachtung elektronisch erzeugter Stereobilder aufbauen. Organische Kunststoffe als Leuchtschicht für die Bilddarstellungen (OLEDs) bieten sich aufgrund ihrer materiellen Flexibilität an. So lassen sich OLED-Displays ohne weiteres auf gekrümmte Flächen, beispielsweise der Innenwand eines Zylinder anbringen. Mittels einer elektronischen Ansteuerung der OLED-Flächen lassen sich beliebige Bildinformationen darstellen. So kann durch entsprechende Ansteuerung eine OLED-Fläche beispielsweise die Bildinformationen mehrerer Bildstreifen auf einer OLED-Fläche dargestellt werden. Bei einer Ansteuerung der Displays durch einen Computer kann dieser, unter Berücksichtigung der Geometrie der Bildelemente und der Geometrie der gesamten Vorrichtung, auch die Berechnungen durchführen, die zur Erzeugung der korrekten Bildinformationen der einzelnen Bildstreifen notwendig sind. Durch sequentielle Darstellung verschiedener Bilder kann auch der Eindruck eines bewegten Objekts bzw. einer bewegten Szene hervorgerufen werden.

## Patentansprüche

1. Vorrichtung zur Multistereobildbetrachtung basierend auf dem Parallaxabbildungsprinzip, mit mehreren nebeneinander angeordneten Bildelementen (11), die jeweils folgendes umfassen:
ein Bildträgerelement (10), auf dessen Oberfläche Bildstreifen (2, 2') nebeneinander dargestellt sind, die gemäß dem Parallaxabbildungsprinzip aus zweidimensionalen Teilbildern (1, 1') eines darzustellenden Objekts erzeugt sind, und
ein Abbildungssystem (4), das abhängig vom Betrachtungswinkel im wesentlichen nur einen Bildstreifen des zugehörigen Bildträgerelementes (10) abbildet,
wobei die Oberfläche des Bildträgerelementes (10) quer zur Längsrichtung der Bildstreifen (2, 2') im wesentlichen konkav, insbesondere halbkreisförmig ist.

2. Vorrichtung nach Anspruch 1, bei der die einzelnen Teilbilder (1, 1') jeweils eine Ansicht des Objekts unter einem bestimmten Betrachtungswinkel darstellen.

3. Vorrichtung nach Anspruch 1 oder 2, bei der die Abbildungssysteme (4) Lentikularlinsen (5) umfassen.

4. Vorrichtung nach Anspruch 1 oder 2, bei der die Abbildungssysteme (4) Schlitzmasken umfassen.

5. Vorrichtung nach einem der vorstehenden Ansprüche, bei der die Bildelemente (11) im wesentlichen entlang der Oberfläche eines zylinderförmigen Körpers (13) angeordnet sind.

6. Vorrichtung nach Anspruch 5, bei der die Teilbilder (1, 1') des Objektes und die Zuordnung der Bildstreifen (2, 2') zu den Bildelemente (11) derart erzeugt sind, daß die Ansicht des dargestellten Objektes unter jedem Betrachtungswinkel, unter dem ein Betrachter den zylinderförmigen Körper (13) betrachtet, der realen Ansicht des Objekts entspricht.

7. Vorrichtung nach einem der vorstehenden Ansprüche, bei der die Bildstreifen (2, 2') beleuchtet sind.

8. Vorrichtung nach einem der Ansprüche 4 bis 7, bei der die Flächen (12) der Schlitzmasken, die den Bildstreifen zugewandt sind, lichtreflektierend sind.

9. Vorrichtung nach einem der vorstehenden Ansprüche, bei der die Bildträgerelemente (10) lichtdurchlässig sind.

10. Vorrichtung nach Anspruch 9, bei der im Inneren des zylinderförmigen Körpers (13) eine oder mehrere Leuchtquellen (16) angeordnet sind, die die Bildstreifen (2, 2') von innen durch die Bildträgerelemente (10) hindurch beleuchten.

11. Vorrichtung nach Anspruch 10, bei der die Leuchtquellen (16) LED oder- OLED-Elemente umfassen.

12. Vorrichtung nach einem der vorstehenden Ansprüche, bei der die aus Bildstreifen (2, 2') bestehenden Teilbilder (1, 1') gedruckte Darstellungen des Objekts sind.

13. Vorrichtung nach einem der vorstehenden Ansprüche, mit einem Antriebsmittel zum Drehen des zylinderförmigen Körpers (13) um dessen Achse.

14. Vorrichtung nach einem der vorstehenden Ansprüche, bei der die Bildträgerelemente (10) Bildflächen zur elektronischen Bildwiedergabe umfassen, beispielsweise OLED-Flächen.

15. Vorrichtung nach Anspruch 14, mit einem Computer zum elektronischen Erzeugen der Bildstreifen (2, 2') auf den Bildflächen.

16. Vorrichtung nach Anspruch 15, bei der die Bildinformationen bewegte Objekte repräsentieren.

17. Vorrichtung nach einem der Ansprüche 4 bis 16, mit vor den Bildträgerelementen (10) angeordneten Fokussierungsmittel (17) umfassen, die das von den Bildstreifen ausgestrahlte Licht auf die Schlitze der Schlitzmasken fokussieren.

18. Vorrichtung nach einem der Ansprüche 4 bis 16, mit hinter den Bildträgerelementen (10) angeordneten Fokussierungsmittel (17), die das von einer Lichtquelle ausgestrahlte Licht derart auf die Bildträgerelemente (10) lenken, daß möglichst viel Licht auf die Schlitze der Schlitzmasken fokussiert wird.

19. Vorrichtung nach einem der vorstehenden Ansprüche, mit einer Wechselvorrichtung mit Führungsschlitzen zum schnellen Wechseln eines wellenförmig gepreßten Bildträgers, der zusammenhängende Bildträgerelemente (10) aufweist.

20. Vorrichtung zur Multistereobildbetrachtung basierend auf dem Parallaxabbildungsprinzip, mit mehreren nebeneinander angeordneten Bildelementen (11), die jeweils folgendes umfassen:
ein Bildträgerelement (10), auf dessen Oberfläche Bildstreifen (2, 2') nebeneinander dargestellt sind, die gemäß dem Parallaxabbildungsprinzip aus zweidimensionalen Teilbildern (1, 1') eines darzustellenden Objekts erzeugt sind, und
ein Abbildungssystem (4), das abhängig vom Betrachtungswinkel im wesentlichen nur einen Bildstreifen des zugehörigen Bildträgerelementes (10) abbildet,
wobei die Bildelemente nebeneinander entlang der Oberfläche eines im wesentlichen zylinderförmigen Körpers (13) angeordnet sind.
